# EUROPÄISCHE PATENTSCHRIFT

(11) **EP 3 585 630 B1**
(45) Veröffentlichungstag und Bekanntmachung des Hinweises auf die Patenterteilung: **08.12.2021**
(21) Anmeldenummer: 18705566.0
(22) Anmeldetag: 06.02.2018
(51) Int. Cl.: B60C 23/04

(54) **REIFENDRUCKSENSOR SOWIE VERWENDUNG EINES REIFENDRUCKSENSORS**
PRESSURE SENSOR AND USE OF A PRESSURE SENSOR
CAPTEUR DE PRESSION ET USAGE D' UN TEL CAPTEUR

(30) Priorität: 04.05.2017 DE 102017109631
(43) Veröffentlichungstag der Anmeldung: 01.01.2020
(73) Patentinhaber: HUF BAOLONG ELECTRONICS BRETTEN GMBH, 75015 Bretten (DE)
(72) Erfinder: WAGNER, Markus, 71638 Ludwigsburg (DE); MÜLLER, Benjamin, 45133 Essen (DE)
(74) Vertreter: Zenz Patentanwälte Partnerschaft mbB
(86) Internationale Anmeldenummer: PCT/EP2018/052917
(87) Internationale Veröffentlichungsnummer: WO 2018/202334

(56) Entgegenhaltungen:
- EP-A1- 2 263 889
- WO-A1-2015/107203
- WO-A2-2015/138431
- US-A1- 2002 044 050
- US-B1- 9 387 732

## Beschreibung

Die Erfindung betrifft einen Reifendrucksensor, der insbesondere für einen Anhängerreifen vorgesehen ist.

Reifendruckkontrollsysteme gehören zur Standardausstattung vieler moderner Fahrzeuge. Neben der Ausstattung von Kraftfahrzeugen mit Reifendruckkontrollsystemen ist auch bekannt, Anhänger mit Reifendruckkontrollsystemen auszustatten.

Reifendruckkontrollsysteme dienen dazu, den Reifendruck zu ermitteln und zu überwachen. Bei Reifendrucksensoren handelt es sich um autark betriebene Systemkomponenten, die an einem Reifen positioniert sind, wobei sowohl im Reifeninneren als auch am Reifenäußeren angeordnete Reifendrucksensoren bekannt sind. Der Reifendrucksensor weist ein Drucksensorelement auf, das den Innendruck des Reifens erfasst. In vielen Fällen umfasst der Reifendrucksensor neben anderen Komponenten auch Sensorelemente zur Erfassung weiterer physikalischer Größen wie beispielsweise der Lufttemperatur innerhalb des Reifens und der Beschleunigung des Sensors. Die erfassten Messdaten werden drahtlos an ein Steuergerät im Fahrzeug übermittelt. Um autark operieren zu können, weist ein Reifendrucksensor eine Batterie zur Energieversorgung auf, die meist als Knopfzelle ausgebildet ist. Oft ist auch eine Messschaltung vorgesehen, welche die von der Batterie bereitgestellte Spannung misst.

Systeme zur Überwachung eines Reifendrucks gehen beispielsweise aus der US 2002/0044050 A1 und aus der EP 2 263 889 A1 hervor.

Im Gegensatz zu Kraftfahrzeugen kann bei Anhängern die Situation vorkommen, dass sie über einen vergleichsweise langen Zeitraum unbewegt bleiben. Beispiele hierfür sind saisonal genutzte Anhänger, wie beispielsweise Wohnwagen, Bootstrailer, Pferdeanhänger oder landwirtschaftlich genutzte Anhänger. Um die Lebensdauer von Batterien in Reifendrucksensoren zu verlängern, ist aus der Praxis bekannt, während eines längeren Stillstands des Anhängers den Energieverbrauch der Reifendrucksensoren zu reduzieren. Dies wird mit Reifendrucksensoren umgesetzt, die für einen längeren Stillstand aus einem aktiven Betriebszustand in einen energieverbrauchsreduzierten Zustand versetzt werden können. Ein Wiedereintritt des Reifendrucksensors in den aktiven Betriebszustand erfolgt bei diesen Systemen in Reaktion auf eine Bewegung des Rads, nachdem diese von einem Beschleunigungssensorelement des Reifendrucksensors erfasst und in ein Wecksignal umgesetzt wurde, das beispielsweise von einem Mikrocontroller des Reifendrucksensors auswertbar ist.

Solche oder ähnliche bekannte Lösungen weisen jedoch unter anderem den Nachteil auf, dass ihre Realisierung aufgrund der erforderlichen permanenten Verfügbarkeit einer Beschleunigungserfassung vergleichsweise aufwendig ist. Außerdem wünschen die Betreiber von Anhängern, die Druckerfassung auch ohne zuvor erzwungene Bewegung des Anhängers zum Wecken der Sensoren durchzuführen.

Vor diesem Hintergrund ist es Aufgabe der Erfindung, einen Reifendrucksensor bereitzustellen, der eine Verlängerung der Batterielebensdauer erlaubt und dennoch jederzeit komfortabel ansprechbar und auslesbar ist.

Die Aufgabe wird gelöst mit einem Reifendrucksensor mit den Merkmalen des Anspruchs 1.

Es ist ein Reifendrucksensor vorgesehen. Der Reifendrucksensor weist auf:
- ein Drucksensorelement,
- eine Funkkommunikationsschnittstelle, die als NFC-Schnittstelle, als Bluetooth-Schnittstelle oder als Bluetooth-Low-Energy-Schnittstelle ausgebildet ist,
- einen Mikrocontroller, der mit dem Drucksensorelement und mit der Funkkommunikationsschnittstelle gekoppelt ist und der zwischen einem Zustand mit reduzierter Energieaufnahme (energieverbrauchsreduzierter Betriebszustand) und einem aktiven Betriebszustand schaltbar ist sowie
- eine Batterie zur Spannungsversorgung.

Bei dem Drucksensorelement handelt es sich um denjenigen Teil des Reifendrucksensors, welcher für die eigentliche Erfassung des physikalischen Drucks vorgesehen ist.

Erfindungsgemäß ist die Funkkommunikationsschnittstelle eingerichtet, mit einem für Funkkommunikation eingerichteten Lesegerät eine Funkkommunikation aufzunehmen und in Abhängigkeit von der Aufnahme der Funkkommunikation das Schalten des Mikrocontrollers von seinem Zustand mit reduzierter Energieaufnahme in seinen aktiven Betriebszustand zu veranlassen. Die Funkkommunikationsschnittstelle steuert erfindungsgemäß das Schalten des Mikrocontrollers in den aktiven Betriebszustand unter der Bedingung, dass die Funkkommunikationsschnittstelle eine Funkkommunikation mit einem geeigneten Lesegerät durchgeführt hat.

Der Mikrocontroller dient insbesondere der Erfassung der Messwerte des Drucksensorelements. Der Mikrocontroller kann auch weitere Aufgaben wahrnehmen, wie eine Weiterverarbeitung der Messwerte, eine Steuerung des Drucksensorelements und/oder Durchführung einer Eigendiagnose.

Der Mikrocontroller ist zwischen einem Zustand mit reduzierter Energieaufnahme und einem aktiven Betriebszustand schaltbar. Der Zustand mit reduzierter Energieaufnahme zeichnet sich dabei dadurch aus, dass die Energieaufnahme des Mikrocontrollers geringer ist als im aktiven Betriebszustand.

Der Zustand mit reduzierter Energieaufnahme kann in dem Mikrocontroller selbst implementiert sein. Alternativ oder zusätzlich kann vorgesehen sein, dass die Spannungsversorgung des Mikrocontrollers trennbar ist und eine Trennung des Mikrocontrollers von der Spannungsversorgung zur Versetzung des Mikrocontrollers in den Zustand mit reduzierter Energieaufnahme genutzt wird. Ein Spezialfall des energieverbrauchsreduzierten Zustands ist also der abgeschaltete Zustand, in welchem der Mikrocontroller keine Energie aufnimmt, da er von der elektrischen Spannungsversorgung getrennt ist.

Vorteilhafte und zweckmäßige Ausgestaltungen und Weiterbildungen der Erfindung ergeben sich aus den Unteransprüchen.

Als Alternative oder zur Ergänzung der Batterie kann ein Energiegenerator vorgesehen sein.

Gemäß einer Variante der Erfindung ist die Funkkommunikationsschnittstelle als BLE-Schnittstelle ausgebildet.

Die BLE-Schnittstelle ist ein Element oder eine Gruppe von Elementen, welches bzw. welche insbesondere für die Übertragung der erfassten Druckdaten vorgesehen ist. Außerdem ist die BLE-Schnittstelle für die Aufnahme und Herstellung einer Verbindung mit einer anderen BLE-Schnittstelle verantwortlich.

Erfindungsgemäß ist die BLE-Schnittstelle ein Element, welches zumindest den Anforderungen der Bluetooth-Low-Energy-Übertragungstechnologie genügt, wie sie in einer der Bluetooth-Spezifikationen mit der Versionsnummer 4.0 oder höher definiert ist, wie sie von dem Bluetooth-Konsortium beispielsweise unter https://www.bluetooth.com/specifications/adopted-specifications bereitgestellt wird. Der Begriff der BLE-Schnittstelle umfasst sämtliche physischen Bauteile, welche zur BLE-Kommunikation mit einem anderen für BLE-Kommunikationen vorgesehenen Gerät erforderlich sind. Der Begriff der BLE-Schnittstelle umfasst insbesondere auch die für die Funkübertragung erforderliche Sende- und/oder Empfangsantenne beziehungsweise -antennen.

Alternativ oder zusätzlich kann vorgesehen sein, dass eine Wiederherstellung der Spannungsversorgung des Mikrocontrollers für das Schalten des Mikrocontrollers in den aktiven Betriebszustand vorgesehen ist.

Zweckmäßig, nicht zuletzt mit Hinblick auf die Herstellungskosten, kann eine Ausgestaltung sein, in der Drucksensorelement, BLE-Schnittstelle und Mikrocontroller ganz oder teilweise Bestandteile eines Moduls sind. Besonders vorteilhaft weist das Modul einen integrierten Schaltkreis auf oder ist das Modul vollständig als integrierter Schaltkreis ausgeführt. Alternativ kann aber auch vorgesehen sein, dass der Reifendrucksensor aus wenigstens zwei unabhängigen Elementen besteht, die miteinander gekoppelt sind.

Erfindungsgemäß ist die BLE-Schnittstelle eingerichtet, mit einem für BLE-Kommunikation eingerichteten Lesegerät eine BLE-Kommunikation aufzunehmen und in Abhängigkeit von der Aufnahme der BLE-Kommunikation das Schalten des Mikrocontrollers von seinem Zustand mit reduzierter Energieaufnahme in seinen aktiven Betriebszustand zu veranlassen. Die BLE-Schnittstelle steuert erfindungsgemäß das Schalten des Mikrocontrollers in den aktiven Betriebszustand unter der Bedingung, dass die BLE-Schnittstelle eine BLE-Kommunikation mit einem geeigneten Lesegerät durchgeführt hat.

Insbesondere kann vorgesehen sein, dass die BLE-Schnittstelle eingerichtet ist, mit einem für BLE-Kommunikation eingerichteten Lesegerät eine BLE-Kommunikation aufzunehmen und in Reaktion auf die Aufnahme der BLE-Kommunikation das Schalten des Mikrocontrollers von seinem Zustand mit reduzierter Energieaufnahme in seinen aktiven Betriebszustand zu veranlassen, dass also die Aufnahme der BLE-Kommunikation notwendige Bedingung, in einer speziellen Ausgestaltung auch hinreichende Bedingung, für das Schalten des Mikrocontrollers in den aktiven Betriebszustand ist.

Das Lesegerät ist nicht Bestandteil der Erfindung. Hingegen sind die Eignung und die Bereitschaft erfindungswesentlich, mit für BLE-Kommunikation eingerichteten Geräten, im Rahmen dieser Erläuterung als Lesegerät bezeichnet, eine spezifikationsgemäße BLE-Kommunikation aufzunehmen, also eine BLE-Kommunikation zu starten und ggf. durchzuführen. Das Lesegerät kann beispielsweise eigens für die Nutzung in Zusammenhang mit der Erfindung bereitgestellt sein. Bei dem Lesegerät kann es sich aber auch um ein handelsübliches, gegebenenfalls modifiziertes, Gerät handeln wie beispielsweise um ein Smartphone, auf dem eine App zur Kommunikation mit dem Reifendrucksensor installiert ist.

Der Mikrocontroller wird entsprechend nur dann in seinen aktiven Betriebszustand versetzt, wenn die BLE-Schnittstelle mit dem Lesegerät einen geeigneten Kommunikationspartner gefunden hat und mit diesem eine BLE-Kommunikation aufgenommen hat. Es kann vorgesehen sein, dass die BLE-Kommunikation mit irgendeinem entsprechend eingerichteten Lesegerät zur Erfüllung dieser Voraussetzung ausreichend ist. Alternativ kann vorgesehen sein, dass zusätzliche Bedingungen erfüllt sein müssen. Als zusätzliche Bedingung kann beispielsweise gefordert sein, dass die BLE-Kommunikation mit einem Lesegerät durchgeführt wird, welches seine Berechtigung nachweist beziehungsweise nachgewiesen hat. Auch andere zusätzlich oder alternativ gestellte Bedingungen können vorgesehen sein.

Der Mikrocontroller des erfindungsgemäßen Reifendrucksensors verbleibt also so lange in seinem inaktiven Zustand, wie keine BLE-Kommunikation von der BLE-Schnittstelle aufgenommen wird. Wenn die BLE-Schnittstelle ein entsprechend eingerichtetes Lesegerät als Kommunikationspartner erfasst und mit diesem die BLE-Kommunikation aufnimmt, veranlasst die BLE-Schnittstelle das Schalten des Mikrocontrollers.

Die BLE-Schnittstelle kann das Schalten des Mikrocontrollers in den aktiven Betriebszustand auf vielfältige Weise veranlassen. Es kann beispielsweise vorgesehen sein, dass die BLE-Schnittstelle selbst einen eigenen Schnittstellen-Mikrocontroller aufweist oder mit einem solchen gekoppelt ist, welcher in einem Wartezustand verbleibt und in Reaktion auf die Aufnahme der BLE-Kommunikation aufgeweckt wird und anschließend eine Ansteuerung der Spannungsversorgung des Mikrocontrollers vornimmt. Aber auch beliebige andere Arten, den Mikrocontroller in den aktiven Betriebszustand zu schalten oder von einem anderen oder von mehreren anderen Bauteilen in den aktiven Betriebszustand schalten zu lassen, können vorgesehen sein. Es können sowohl unmittelbar erfolgende Schaltvorgänge in den aktiven Betriebszustand vorgesehen sein wie auch das Ausgeben von mittelbaren Auslösern, die dann von anderen Elementen interpretiert und umgesetzt werden.

Nachrangig für die Erfindung ist, auf welche Weise und/oder zu welchem Zeitpunkt das Schalten des Mikrocontrollers von seinem aktiven Betriebszustand in den Zustand mit reduzierter Energieaufnahme erfolgt. Beispielsweise kann vorgesehen sein, dass automatisch ein Versetzen des Mikrocontrollers in den Zustand mit reduzierter Energieaufnahme erfolgt, wenn über eine vorgegebene Zeitdauer keine BLE-Kommunikation der BLE-Schnittstelle mit einem anderen Lesegerät erfolgt ist. Alternativ oder zusätzlich kann auch ein benutzerveranlasstes manuelles Schalten des Mikrocontrollers in den energieverbrauchsreduzierten Zustand vorgesehen sein oder der Übergang in Abhängigkeit von Daten eines Beschleunigungssensors erfolgen.

Einer der Vorteile der Erfindung besteht darin, dass der Mikrocontroller in seinen aktiven Betriebszustand geschaltet wird und dadurch in einen funktionstätigen Zustand versetzt wird, ohne dass dazu ein Bewegen des Reifens erforderlich ist. Der Reifendrucksensor eignet sich deswegen in besonderer Weise auch für Anhänger, die über längere Zeiträume nicht bewegt werden. Wenn der Reifendrucksensor beispielsweise in einem Reifen eines Anhängers angeordnet ist, kann der Reifendruck bereits vor Ankopplung und Bewegen des Anhängers erfasst werden. Sobald nämlich ein entsprechend eingerichtetes Lesegerät in die Nähe des Reifendrucksensors gelangt und in Reaktion auf die Aufnahme der BLE-Kommunikation das Schalten des Mikrocontrollers in den aktiven Betriebszustand erfolgt ist, kann ein Erfassen des Reifendrucks und dessen Übermittlung an das Lesegerät erfolgen. So ist es möglich, dass ein Zugfahrzeug eines Anhängers die Informationen zu den Reifendrücken des Anhängerreifens ausliest, noch bevor ein Ankoppeln an den Wagen besteht.

Weiterhin kann aufgrund des sehr energieverbrauchsarmen Betriebs der BLE-Schnittstelle eine langfristige Ansprechbarkeit des Reifendrucksensors erreicht werden. Denn es kann auch nach längerer Standzeit noch eine genügend hohe Energiereserve in der Batterie für die Reifendruckbestimmung und -übermittlung wie auch für den weiteren Betrieb des Reifendrucksensors erwartet werden.

Gemäß einer Ausbildungsform kann vorgesehen sein, dass der Reifendrucksensor einen Lage- und/oder Beschleunigungssensor aufweist, und dass das Schalten des Mikrocontrollers in seinen aktiven Betriebszustand zumindest auch von einer Änderung der Lage und/oder Beschleunigung des Lage- und/oder Beschleunigungssensors abhängig ist.

In einer Ausgestaltung des Reifendrucksensors ist vorgesehen, dass die BLE-Schnittstelle ausgebildet ist, zur Anzeige ihrer Bereitschaft zur Verbindungsaufnahme einen Advertising State einzunehmen. Bevorzugt ist der Reifendrucksensor eingerichtet, immer dann in einem Advertising State zu sein, wenn der Mikrocontroller in seinem energieverbrauchsreduzierten Zustand ist und die BLE-Schnittstelle nicht bereits eine Kommunikation mit einem Gegengerät aufgenommen hat. Dabei ist die BLE-Schnittstelle eingerichtet, das Schalten des Mikrocontrollers in seinen aktiven Betriebszustand zu einem Zeitpunkt zu veranlassen, welcher unmittelbar oder mit einem vorbestimmten Zeitabstand auf ein Erfassen eines Connect Requests des Lesegeräts durch die BLE-Schnittstelle folgt.

Die Begrifflichkeiten des Advertising State und des Connect Requests sind im Sinne ihrer spezifikationsgemäßen Bedeutung zu verstehen, wie sie beispielsweise in den eingangs genannten Bluetooth-Spezifikationen definiert sind.

Während eines Zeitraums, in welchem der Mikrocontroller energieverbrauchsreduziert ist, vermittelt die BLE-Schnittstelle mittels der Übersendung eines oder mehrerer spezifikationsgemäß als Advertising Channel Packet bezeichneter Datenpakete Informationen über seine Anwesenheit und seine Verbindungsbereitschaft. In einem Fall, in dem ein Lesegerät ein solches Advertising Channel Packet empfängt, reagiert es spezifikationsgemäß mit einer Verbindungsanfrage, nämlich einem Connect Request. Unmittelbar auf den Empfang des Connect Requests oder mit einem vorbestimmten Zeitabstand nach dem Erfassen des Connect Requests veranlasst die BLE-Schnittstelle das Schalten des Mikrocontrollers in seinen aktiven Betriebszustand. In dieser Ausgestaltung ist also vorgesehen, dass bereits die Anfrage des Lesegeräts nach einer Etablierung einer Verbindung der BLE-Schnittstelle von der BLE-Schnittstelle als Auslöser aufgefasst wird, mit welchem die BLE-Schnittstelle sich veranlasst sieht, den Wiedereintritt des Mikrocontrollers in den aktiven Betriebszustand durch das Veranlassen des entsprechenden Schaltvorgangs herbeizuführen.

In einer alternativen Weiterbildung kann vorgesehen sein, dass die BLE-Schnittstelle ausgebildet ist zur Anzeige ihrer Bereitschaft zur Verbindungsaufnahme einen Advertising State einzunehmen, wenn der Mikrocontroller sich in seinem energieverbrauchsreduzierten Zustand befindet. Dabei ist die BLE-Schnittstelle eingerichtet, das Schalten des Mikrocontrollers in seinen aktiven Betriebszustand zu einem Zeitpunkt zu veranlassen, der unmittelbar oder mit einem vorbestimmten Zeitabstand auf ein Etablieren einer BLE-Verbindung der BLE-Schnittstelle mit dem Lesegerät folgt.

Diese Weiterbildung sieht also die Vorgabe vor, dass die BLE-Verbindung der BLE-Schnittstelle mit dem Lesegerät etabliert sein muss. Die BLE-Kommunikation ist also aufgenommen. Mit anderen Worten haben sowohl die BLE-Schnittstelle als auch das Lesegerät in diesem Rahmen den spezifikationsgemäßen Connection State eingenommen. Gegenüber der zuvor erläuterten alternativen Weiterbildung führt die geforderte Etablierung der BLE-Verbindung zu dem Vorteil, dass nach dem Erfassen eines Connect Requests und vor dem angestrebten Abschluss des Etablierens der BLE-Verbindung das Abprüfen weiterer Bedingungen erfolgen kann. Durch das zusätzliche Prüfen auf die Erfüllung weiterer Bedingungen kann erreicht werden, dass der Wiedereintritt des Mikrocontrollers in seinen aktiven Betriebszustand nicht bereits bei hinreichender Nähe eines beliebigen für BLE-Kommunikationen eingerichteten Lesegeräts erfolgt, sondern dass die geforderten Voraussetzungen spezifischer und enger angepasst werden können. Beispielsweise kann vorgesehen sein, dass eine Identifikationskennung des Lesegeräts abgefragt wird und nur in einem solchen Fall das Schalten des Mikrocontrollers in den aktiven Betriebszustand erfolgt, in dem die Identifikationskennung einer erwarteten Identifikationskennung entspricht.

In einer vorteilhaften Weiterbildung ist vorgesehen, dass die BLE-Schnittstelle eingerichtet ist, mit dem Lesegerät im Rahmen der BLE-Kommunikation spezifikationsgemäß ein Netzwerk oder einen Teil eines Netzwerks zu bilden, in welchem die BLE-Schnittstelle Peripheral-Status einnimmt und das Lesegerät Central-Status einnimmt.

Alternativ kann vorgesehen sein, dass die BLE-Schnittstelle und das Lesegerät zur Bildung eines Netzwerks oder eines Teils eines Netzwerks eingerichtet sind, in welchem die BLE-Schnittstelle Central-Status einnimmt und das Lesegerät Peripheral-Status einnimmt.

Auch kann vorgesehen sein, dass nach Etablieren einer Verbindung mit dem Lesegerät im Connected Mode die Sende- und Empfangsleistung und/oder die Übermittlungszeiten eingestellt werden können, bevorzugt durch Steuerung mittels des Lesegeräts.

Durch ein Bilden eines derartigen Netzwerks werden in vorteilhafter Weise die Voraussetzungen geschaffen, dass das Lesegerät den Reifendrucksensor und gegebenenfalls andere in der Nähe vorhandene Reifendrucksensoren ansprechen, auslesen und/oder steuern kann.

Insbesondere kann vorgesehen sein, dass die BLE-Schnittstelle eingerichtet ist, einen spezifikationsgemäßen Scanning State einzunehmen, insbesondere im Central-Status.

Indem die BLE-Schnittstelle im Scanning State operiert, sind die Voraussetzungen dafür gegeben, dass weitere BLE-Schnittstellen von der BLE-Schnittstelle erkannt werden, die sodann in ein Reifendrucksensornetzwerk eingebunden werden können. Im Rahmen dieser Weiterbildung ist also vorgesehen, dass die BLE-Schnittstelle einerseits einen Periperal-Status in einem Netzwerk mit dem Lesegerät einnimmt und andererseits einen Central-Status in einem anderen Netzwerk einnimmt. Das andere Netzwerk umfasst dann beispielsweise die BLE-Schnittstelle und weitere BLE-Schnittstellen von weiteren Reifendrucksensoren. So kann beispielsweise vorgesehen sein, dass eine Anzahl von Reifendrucksensoren mehrerer oder aller Reifen eines Fahrzeugs, beispielsweise von zwei oder vier Reifen eines Anhängers, in einem Reifendrucksensornetzwerk miteinander vernetzt sind. In diesem Reifendrucksensornetzwerk fungiert die BLE-Schnittstelle als Central, während die weiteren BLE-Schnittstellen von dem Central in das Netzwerk eingebunden werden. Mit anderen Worten dient die BLE-Schnittstelle als Mittler zwischen Lesegerät und den weiteren BLE-Schnittstellen der anderen Reifendrucksensoren. Dies wird erreicht, indem die BLE-Schnittstelle gegenüber dem Lesegerät Peripheral-Status einnimmt und gegenüber den weiteren BLE-Schnittstellen Central-Status einnimmt.

Bereits in diesem Stadium kann vorgesehen sein, dass die als Central ausgebildete BLE-Schnittstelle Messdaten entgegennimmt und zwischenspeichert und diese nach Etablieren einer Verbindung (Connect) mit einem Lesegerät die zwischengespeicherten Daten an das Lesegerät übermittelt.

Es kann aber auch nach Etablieren der Verbindung ein Netzwerk vorgesehen sein, in welchem bevorzugt die BLE-Schnittstelle als Master und das Lesegerät und die weiteren BLE-Schnittstellen als Slave eingebunden sind.

In einer Weiterbildung kann vorgesehen sein, dass nach Etablieren einer Verbindung mit dem Lesegerät im Connected Mode die Sende- und Empfangsleistung und/oder die Übermittlungszeiten eingestellt werden können, bevorzugt durch Steuerung mittels des Lesegeräts.

Ferner kann optional vorgesehen sein, dass eine BLE-Verbindung erst eingenommen werden kann, wenn an dem Lesegerät oder an dem Reifendrucksensor eine Authentifikation mittels eines NFC-Sensors vorgenommen wurde, der mit dem Reifendrucksensor und/oder mit dem Lesegerät gekoppelt ist und der zur Authentifikation eines geeigneten NFC-Moduls eingerichtet ist, welches einen berechtigten Bediener ausweisen kann.

Gemäß einer anderen vorteilhaften Ausführungsform kann vorgesehen sein, dass die BLE-Schnittstelle ein Speichermodul aufweist oder mit einem Speichermodul gekoppelt ist, wobei auf dem Speichermodul Identifikationsdaten von wenigstens einem vorbestimmten identifizierbaren Lesegerät hinterlegt sind. Dabei ist die BLE-Schnittstelle außerdem eingerichtet, das Schalten des Mikrocontrollers in seinen aktiven Betriebszustand nur nach Erfüllung der Bedingung zu veranlassen, dass die BLE-Kommunikation mit dem vorbestimmten Lesegerät erfolgt. Dadurch kann erreicht werden, dass vor dem Schalten des Mikrocontrollers in den aktiven Betriebszustand sichergestellt ist, dass das Lesegerät auch ein berechtigtes Lesegerät ist. Dadurch wird erreicht, dass andere als das berechtigte Lesegerät nicht die Ursache dafür sein können, dass der Mikrocontroller wieder seinen aktiven Betriebszustand einnimmt. In der Konsequenz führt dies zu dem Vorteil, dass der Energieverbrauch des Mikrocontrollers optimiert wird, da nicht erforderliches Aktivieren des Mikrocontrollers vermieden wird.

In einer speziellen Ausgestaltung ist vorgesehen, dass der Mikrocontroller und die Batterie mittels einer trennbaren galvanischen Kopplung verbunden sind. Dabei ist vorgesehen, dass die galvanische Kopplung zwischen der Batterie und dem Mikrocontroller im Zustand des Mikrocontrollers mit reduzierter Energieaufnahme aufgehoben ist. Weiterhin ist vorgesehen, dass die Funkkommunikationsschnittstelle, die bevorzugt als BLE-Schnittstelle ausgebildet ist, eingerichtet ist, die elektrische Verbindung herzustellen zur Herbeiführung einer Spannungsversorgung des Mikrocontrollers, die dessen Schaltung in den aktiven Betriebszustand bewirkt.

In dieser speziellen Ausgestaltung ist also vorgesehen, dass das Schalten des Mikrocontrollers von seinem energieverbrauchsreduzierten Zustand in seinen aktiven Betriebszustand erfolgt, indem die Stromzufuhr unterbrochen und wiederhergestellt wird. Diese Ausgestaltung hat den Vorteil, dass nicht notwendigerweise ein Implementieren eines energieverbrauchsreduzierten Schlafzustands in den Mikrocontroller erforderlich ist, sondern dass durch unmittelbaren Eingriff in die Spannungsversorgung des Mikrocontrollers auf zuverlässige Weise die Änderung dessen Betriebszustandes erreicht werden kann. Insbesondere ist in dieser Ausgestaltung in konstruktiv einfacher Weise sichergestellt, dass der Energieverbrauch des Mikrocontrollers in seinem energieverbrauchsreduzierten Betriebszustand infolge der vollständigen Entkopplung des Mikrocontrollers von der Spannungsversorgung minimiert wird.

Gemäß einer weiteren Ausgestaltung kann vorgesehen sein, dass in Reaktion auf die Aufnahme der Funkkommunikation eine erstmalige oder wiederholte Ermittlung physikalischer Parameter des Reifens, insbesondere Druck, Temperatur und/oder Beschleunigung ausgelöst wird.

Gemäß einem weiteren Gedanken der Erfindung, der auch abhängig, aber auch unabhängig von den oben dargelegten Erläuterungen denkbar ist, ist eine Verwendung eines erfindungsgemäßen Reifendrucksensors oder einer seiner Weiterbildungen zur Übermittlung eines Reifendrucks eines unbewegten Anhängers an ein portables Lesegerät oder an ein Lesegerät, das in einem Zugfahrzeug mitgeführt ist, vorgesehen.

Ein weiterer Gedanke, der abhängig aber auch unabhängig von den vorstehenden Gedanken verfolgt werden kann, betrifft ein Nachrüstset, das wenigstens einen erfindungsgemäßen Reifendrucksensor oder eine seiner Weiterbildungen aufweist, wobei der Reifendrucksensor verwendet werden soll, um einen Reifen eines Anhängers mit diesem Reifendrucksensor nachzurüsten. Das Nachrüstset kann sich insbesondere dadurch auszeichnen, dass der Reifendrucksensor als Modul ausgebildet ist, um eine einfache nachträgliche Nachrüstung eines Reifens zu ermöglichen.

Ein weiterer Gedanke der Erfindung betrifft die grundsätzliche Idee eines Verfahrens zum Betrieb eines Reifendrucksensors, insbesondere eines Reifendrucksensors der eingangs genannten Art oder einer seiner Weiterbildungen. Das Verfahren sieht dabei vor, dass eine BLE-Schnittstelle des Reifendrucksensors eine BLE-Kommunikation mit einem Lesegerät aufnimmt, welches für BLE-Kommunikationen eingerichtet ist; dabei veranlasst die BLE-Schnittstelle in Reaktion auf die Aufnahme der BLE-Kommunikation das Schalten des Mikrocontrollers von einem energieverbrauchsreduzierten Betriebszustand in einen aktiven Betriebszustand. Gemäß diesem Gedanken der Erfindung sollen der erfindungsgemäße Reifendrucksensor wie auch seine Weiterbildungen in verfahrensmäßiger Umsetzung im Rahmen des eigenständigen Gedankens weitergeführt werden können.

Ein weiterer Gedanke betrifft ein Verfahren zum Betrieb eines Reifendrucksensors. So kann vorgesehen sein, dass zusätzlich zu dem Mikrocontroller ein zweiter Mikrocontroller vorgesehen ist, wobei der Mikrocontroller zur Steuerung einer ersten Funktionalität eingerichtet ist und der zweite Mikrocontroller zur Steuerung einer zweiten Funktionalität eingerichtet ist. Der Mikrocontroller und der zweite Mikrocontroller sind unabhängig voneinander zwischen einem Zustand mit reduzierter Energieaufnahme und einem aktiven Betriebszustand schaltbar. Der erste Mikrocontroller ist eingerichtet, den zweiten Mikrocontroller in einen aktiven Betriebszustand zu versetzen, wenn der erste Mikrocontroller einen vorgegebenen Zustand eingenommen hat, bevorzugt die BLE-Kommunikation einen vorgegebenen Status eingenommen hat.

In einer speziellen Weiterbildung kann vorgesehen sein, dass die als BLE-Schnittstelle ausgebildete

Funkkommunikationsschnittstelle wiederholt Messwerte oder aus Messwerten abgeleitete Reifenparameter mit einem Advertise-Paket im Advertising State des Reifendrucksensors übermittelt. Es wird ein Zeitraum zwischen einer ersten Übermittlung und einer wiederholten und aktualisierten Übermittlung in Abhängigkeit von einem Fahrzustand des Reifens gewählt, in dem der Reifendrucksensor angeordnet ist. Die übermittelten Daten werden mit einem zur BLE-Kommunikation eingerichteten Lesegerät empfangen.

In einer Weiterbildung des Verfahrens
- erfolgt in einer ersten Phase das Übermitteln der Daten unter Verwendung jedes der drei bereitgestellten Advertising Channel,
- fragt in einer zweiten Phase das Lesegerät einen ersten der drei Advertising Channel, dann einen zweiten der drei Advertising Channel und dann einen dritten der drei Advertising Channel sequentiell und jeweils von einer Pause unterbrochen ab.

Dabei kann vorgesehen sein, dass nach einer bestimmten Zeitdauer der zweiten Phase die zweite Phase unterbrochen wird durch eine dritte Phase, in der ein Übermitteln unter Verwendung jedes der drei bereitgestellten Advertising Channel erfolgt.

Diese Vorgehensweise geht in vorteilhafter Weise mit einem Energieersparnis einher.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere Einzelheiten, Merkmale und Vorteile des Gegenstands der Erfindung ergeben sich aus der Beschreibung im Zusammenhang mit den Figuren.

Die Figuren zeigen:
Fig. 1: eine beispielhafte Ausgestaltung eines erfindungsgemäßen Reifendrucksensors;
Fig. 2: einen aus der Praxis bekannten Reifendrucksensor;
Fig. 3: eine schematische Skizze eines Kraftfahrzeugs mit einem angehängten Anhänger.

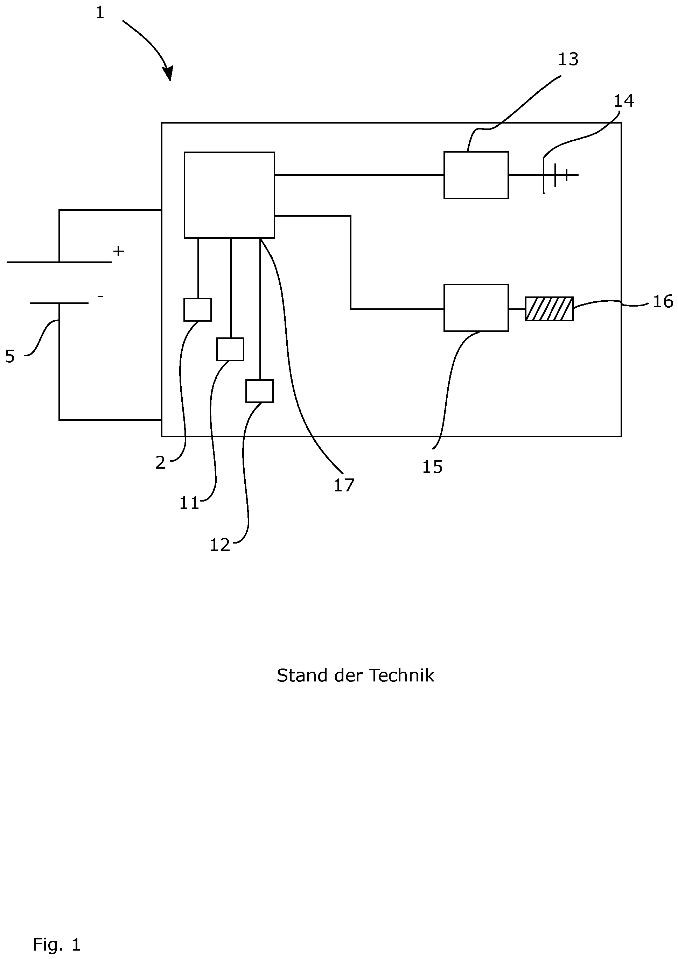

Fig. 1 ist eine schematische Darstellung eines aus der Praxis bekannten Reifendrucksensors 1 zu entnehmen. Der Reifendrucksensor 1 ist in der dargestellten Ausgestaltung als integrierter Sensor IC vorgesehen. Der exemplarisch dargestellte Reifendrucksensor 1 weist ein Drucksensorelement 2 auf, welches mit einem Mikrocontroller 4 gekoppelt ist. Zusätzlich zu dem Drucksensorelement 2 sind ein Temperatursensorelement 11 und ein Beschleunigungssensorelement 12 mit dem Mikrocontroller 4 gekoppelt. Der Mikrocontroller 4 erfüllt unter anderem die Aufgabe, Sensorantworten zu sammeln und auszuwerten, welche die Sensorelemente für Druck 2, Temperatur 11 und Beschleunigung 12 in Reaktion auf die entsprechenden physikalischen Stimuli erfassen. Nach der Auswertung der erfassten Daten durch den Mikrocontroller 4 werden die Daten für die weitere Kommunikation mit einem nicht dargestellten Steuergerät des Kraftfahrzeugs genutzt. Ferner kann optional ein Speicherelement vorgesehen sein, auf dem erfasste Parameter für ein späteres Auslesen zwischengespeichert werden. Auch ein Speichern einer Historie von Parametern sowie alternativ oder zusätzlich einem oder mehreren Zeitpunkten vergangener Auslesevorgänge kann vorgenommen werden. Die Kommunikation mit dem Steuergerät des Kraftfahrzeugs erfolgt im Rahmen einer bidirektionalen Funkverbindung. Die bidirektionale Funkverbindung umfasst zum einen ein Senden von ausgewerteten Messdaten, wobei das Senden über eine HF-Antenne 14 erfolgt, die von einer mit der HF-Antenne 14 gekoppelten HF-Sendeeinheit 13 angesteuert wird. Die Spannungsversorgung der einzelnen Bestandteile des Reifendrucksensors 1 erfolgt mittels der Batterie 5. Für einen Empfang von Anforderungsanweisungen oder anderen Steuerbefehlen ist die LF-Antenne 16 vorgesehen, die mit einer LF-Empfangseinheit 15 gekoppelt ist. Über die LF-Antenne 16 und die LF-Empfangseinheit 15 ist der Reifendrucksensor 1 in der Lage, Steueranweisungen von dem Steuergerät zu empfangen. Der Mikrocontroller 4 ist eingerichtet, die Steueranweisungen auszuwerten und umzusetzen.

Bei aus der Praxis bekannten Ausgestaltungen eines Reifendrucksensors 1 ist der Mikrocontroller 4 eingerichtet, einen Ruhezustand einzunehmen. Beispielsweise kann vorgesehen sein, dass der Ruhezustand von dem Mikrocontroller 4 eingenommen wird, wenn über eine vorbestimmte Zeitdauer keine Bewegung des Reifendrucksensors 1 mehr sensiert worden ist. Eine im Ruhezustand des Mikrocontrollers 4 durchgeführte Bewegung wird von dem Beschleunigungssensorelement 12 erkannt und resultiert in einem Wecksignal, das an dem Eingangspin 17 angelegt wird. Wenn der Mikrocontroller dieses Wecksignal empfängt, führt dies zu seinem Versetzen aus dem Ruhezustand in den aktiven Betriebszustand.

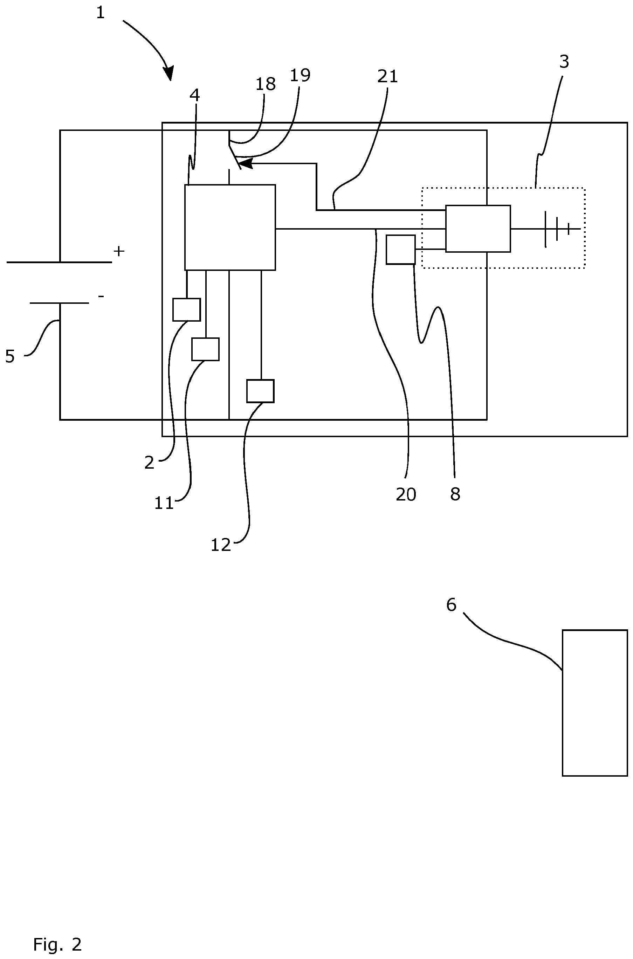

Fig. 2 ist eine beispielhafte Ausgestaltung eines erfindungsgemäßen Reifendrucksensors 1 zu entnehmen. Der erfindungsgemäße Reifendrucksensor 1 weist ein Drucksensorelement 2 auf. Das Drucksensorelement 2 ist mit einem Mikrocontroller 4 gekoppelt. Der Mikrocontroller 4 dient dabei unter anderem der Steuerung des Drucksensorelements 2 sowie der Erfassung von Daten, welche das Drucksensorelement 2 erfasst. Der Mikrocontroller 4 ist mit einer als Bluetooth-Low-Energy-Schnittstelle 3 ausgebildeten Funkkommunikationsschnittstelle gekoppelt, wobei in der dargestellten Ausführungsform die Kopplung mit der Bluetooth-Low-Energy-Schnittstelle 3 sowie die Kopplung mit dem Drucksensorelement 2 in Parallelschaltung vorliegt. Auch eine Reihenschaltung von BLE-Schnittstelle 3 und Drucksensorelement 2 kann vorgesehen sein mit dem Vorteil, dass ein unmittelbarer Steuerzugriff der BLE-Schnittstelle 3 auf das Drucksensorelement 2 vorgesehen werden kann. Die BLE-Schnittstelle 3 ist über die Verbindung 20 mit dem Mikrocontroller verbunden, wobei selbstverständlich auch andere geeignete Verbindungen der BLE-Schnittstelle mit dem Mikrocontroller vorgesehen sein können. Der Mikrocontroller 4 ist zwischen einem energieverbrauchsreduzierten Zustand und einem aktiven Betriebszustand schaltbar eingerichtet. In der dargestellten Ausführungsform wird das Schalten des Mikrocontrollers bewirkt, indem die elektrische Verbindung 18 zwischen Mikrocontroller 4 und der Batterie 5 getrennt wird für ein Schalten in den energieverbrauchsreduzierten Zustand und wiederhergestellt wird für ein Schalten in den aktiven Zustand. Um das Schalten zu bewerkstelligen, weist der Eingang der Verbindung 20 in der BLE-Schnittstelle 3 einen genügend hohen Eingangswiderstand auf. In Fig. 2 ist die Verbindung 18 getrennt, sodass der Mikrocontroller sich im energieverbrauchsreduzierten Zustand befindet. Die BLE-Schnittstelle 3 ist eingerichtet, mit einem Lesegerät 6 eine BLE-Kommunikation aufzunehmen unter der Voraussetzung, dass auch das Lesegerät 6 für eine BLE-Kommunikation eingerichtet ist. Die BLE-Schnittstelle 3 ist zur Ausführung von Anweisungen eingerichtet, gemäß denen nach Feststellen einer BLE-Kommunikation mit dem Lesegerät 6 diese BLE-Kommunikation als Auslöser interpretiert wird, um den Mikrocontroller 4 von seinem energieverbrauchsreduzierten Zustand in seinen aktiven Betriebszustand zu schalten. Dieser Schaltvorgang erfolgt in der gezeigten Ausführungsform, indem die BLE-Schnittstelle ein Schaltsignal ausgibt (dargestellt durch Pfeil 21), das einen Aktor ansteuert, mit dem der Schalter 19 betätigt wird und die Verbindung 18 geschlossen wird. Durch das Schließen des Stromkreises zwischen Batterie 5 und Mikrocontroller 4 durch Schließen der Verbindung 18 mit dem Schalter 19 nimmt der Mikrocontroller 4 unmittelbar seinen Betrieb auf, operiert also wieder in seinem aktiven Betriebszustand. In diesem Betriebszustand ist der Mikrocontroller 4 in der Lage, von dem Drucksensorelement 2 erfasste Messdaten zu lesen und zu interpretieren. In Fällen, in denen es sich bei dem Drucksensorelement 2 um ein steuerbares Drucksensorelement 2 handelt, ist der Mikrocontroller 4 des Weiteren für die Steuerung des Drucksensorelements 2 verantwortlich. Des Weiteren weist Fig. 2 ein Temperatursensorelement 11 und ein Beschleunigungssensorelement 12 auf, wobei diese optional und nicht erfindungswesentlich sind.

Der Reifendrucksensor 1 weist weiterhin ein Speichermodul 8 auf, welches mit der BLE-Schnittstelle 3 gekoppelt ist. Auf dem Speichermodul 8 sind Identifikationsdaten hinterlegt, mit denen vorbestimmte identifizierbare Lesegeräte gekennzeichnet sind. Die BLE-Schnittstelle 3 ist eingerichtet, einen Kontaktversuch eines Lesegeräts 6 mit einem Abgleich zwischen Identifikationsdaten des Lesegeräts 6 und den hinterlegten Identifikationsdaten zu ergänzen, wobei ein Schalten des Mikrocontrollers in seinen aktiven Betriebszustand nur dann veranlasst wird, wenn die auf dem Speichermodul 8 hinterlegten Identifikationsdaten die Berechtigung des Lesegeräts 6 nachweisen. Das Speichermodul ist Bestandteil einer vorteilhaften Weiterbildung der Erfindung; die Erfindung ist aber auch ohne dieses Speichermodul 8 ausführbar.

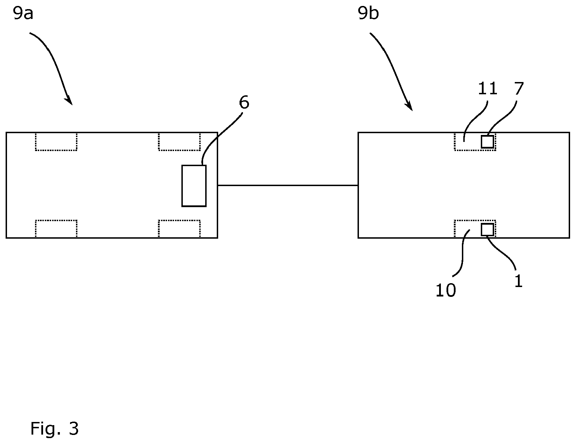

Fig. 3 ist ein Anhänger 9b zu entnehmen, welcher an ein Zugfahrzeug 9a angehängt ist. Das Zugfahrzeug 9a weist ein Lesegerät 6 auf, welches zum Ansprechen eines Reifendrucksensors 1 eingerichtet ist, wobei die erfolgende Kommunikation zwischen Lesegerät 6 und Reifendrucksensor 1 mittels BLE-Kommunikation erfolgt. Der Reifendrucksensor ist hierzu gemäß einer Ausführungsform ausgebildet, die der in Fig. 2 dargestellten Ausführungsform entspricht. Der Anhänger 9b weist einen ersten Reifen 10 und einen zweiten Reifen 11 auf. Der erste Reifen 10 umfasst einen Reifendrucksensor 1, der zweite Reifen 11 umfasst einen weiteren Reifendrucksensor 7, der eine weitere BLE-Schnittstelle aufweist.

## Patentansprüche

1. Reifendrucksensor (1), wobei der Reifendrucksensor (1) aufweist:
ein Drucksensorelement (2);
eine Funkkommunikationsschnittstelle (3), die als NFC-Schnittstelle, als Bluetooth-Schnittstelle oder als Bluetooth-Low-Energy-Schnittstelle (BLE-Schnittstelle) ausgebildet ist;
einen mit dem Drucksensorelement (2) und mit der Funkkommunikationsschnittstelle (3) gekoppelten Mikrocontroller (4), der zwischen einem Zustand mit reduzierter Energieaufnahme und einem aktiven Betriebszustand schaltbar ist sowie
eine Batterie (5) oder einen Energiegenerator zur Spannungsversorgung,
**dadurch gekennzeichnet, dass** die Funkkommunikationsschnittstelle (3) eingerichtet ist, mit einem für Funkkommunikation eingerichteten Lesegerät (6) eine Funkkommunikation (3) aufzunehmen und in Abhängigkeit von der Aufnahme der Funkkommunikation das Schalten des Mikrocontrollers (4) von seinem Zustand mit reduzierter Energieaufnahme in seinen aktiven Betriebszustand zu veranlassen.

2. Reifendrucksensor (1) nach Anspruch 1, wobei die Funkkommunikationsschnittstelle eine Bluetooth-Schnittstelle oder eine NFC-Schnittstelle ist.

3. Reifendrucksensor (1), wobei der Reifendrucksensor (1) aufweist:
ein Drucksensorelement (2);
einen Lage- und/oder Beschleunigungssensor;
eine Funkkommunikationsschnittstelle (3), die als NFC-Schnittstelle, als Bluetooth-Schnittstelle oder als Bluetooth-Low-Energy-Schnittstelle (BLE-Schnittstelle) ausgebildet ist;
einen mit dem Drucksensorelement (2) und mit der Funkkommunikationsschnittstelle (3) gekoppelten Mikrocontroller (4), der zwischen einem Zustand mit reduzierter Energieaufnahme und einem aktiven Betriebszustand schaltbar ist sowie
eine Batterie (5) zur Spannungsversorgung,
**dadurch gekennzeichnet, dass** die Funkkommunikationsschnittstelle (3) eingerichtet ist, mit einem für Funkkommunikation eingerichteten Lesegerät (6) eine Funkkommunikation (3) aufzunehmen und in Abhängigkeit von einer Änderung der Lage und/oder Beschleunigung des Lage- und/oder Beschleunigungssensors das Schalten des Mikrocontrollers (4) von seinem Zustand mit reduzierter Energieaufnahme in seinen aktiven Betriebszustand zu veranlassen.

4. Reifendrucksensor (1), nach Anspruch 1 oder nach Anspruch 3,
wobei die Funkkommunikationsschnittstelle (3) eine Bluetooth-Low-Energy-Schnittstelle (BLE-Schnittstelle) (3) ist,
wobei die BLE-Schnittstelle (3) eingerichtet ist, mit dem für BLE-Kommunikation eingerichteten Lesegerät (6) eine BLE-Kommunikation (3) aufzunehmen und in Abhängigkeit von der Aufnahme der BLE-Kommunikation das Schalten des Mikrocontrollers (4) von seinem Zustand mit reduzierter Energieaufnahme in seinen aktiven Betriebszustand zu veranlassen.

5. Reifendrucksensor (1) nach Anspruch 4,
wobei die BLE-Schnittstelle (3) ausgebildet ist, zur Anzeige ihrer Bereitschaft zur Verbindungsaufnahme einen Advertising State einzunehmen, wenn sich der Mikrocontroller (4) im Zustand mit reduzierter Energieaufnahme befindet, und
wobei die BLE-Schnittstelle (3) eingerichtet ist, das Schalten des Mikrocontrollers (4) in seinen aktiven Betriebszustand zu einem Zeitpunkt zu veranlassen, der unmittelbar oder mit einem vorbestimmten Zeitabstand auf ein Erfassen eines Connect Requests des Lesegeräts (6) durch die BLE-Schnittstelle (3) folgt.

6. Reifendrucksensor (1) nach Anspruch 4,
wobei die BLE-Schnittstelle (3) ausgebildet ist, zur Anzeige ihrer Bereitschaft zur Verbindungsaufnahme einen Advertising State einzunehmen, wenn sich der Mikrocontroller (4) im Zustand mit reduzierter Energieaufnahme befindet, und
wobei die BLE-Schnittstelle (3) eingerichtet ist, das Schalten des Mikrocontrollers (4) in seinen aktiven Betriebszustand zu einem Zeitpunkt zu veranlassen, der unmittelbar oder mit einem vorbestimmten Zeitabstand auf ein Etablieren einer BLE-Verbindung der BLE-Schnittstelle (3) mit dem Lesegerät (6) folgt.

7. Reifendrucksensor (1) nach einem der Ansprüche 4 bis 6,
wobei die BLE-Schnittstelle (3) eingerichtet ist, mit dem Lesegerät (6) im Rahmen der BLE-Kommunikation ein Netzwerk oder einen Teil eines Netzwerks zu bilden, in welchem die BLE-Schnittstelle (3) Peripheral-Status einnimmt und das Lesegerät (6) Central-Status einnimmt.

8. Reifendrucksensor (1) nach einem der Ansprüche 4 bis 6,
wobei die BLE-Schnittstelle (3) eingerichtet ist, mit dem Lesegerät (6) im Rahmen der BLE-Kommunikation ein Netzwerk oder einen Teil eines Netzwerks zu bilden, in welchem die BLE-Schnittstelle (3) Central-Status einnimmt und das Lesegerät (6) Peripheral-Status einnimmt.

9. Reifendrucksensor (1) nach Anspruch 8, wobei die BLE-Schnittstelle (3) eingerichtet ist, dass nach Etablieren einer Verbindung mit dem Lesegerät im Connected Mode die Sende- und Empfangsleistung und/oder die Übermittlungszeiten eingestellt werden können, bevorzugt durch Steuerung mittels des Lesegeräts.

10. Reifendrucksensor (1) nach einem der Ansprüche 7 bis 9,
wobei die BLE-Schnittstelle (3) eingerichtet ist, insbesondere im Central-Status, einen Scanning State einzunehmen, um weitere BLE-Schnittstellen zu erfassen, um mit diesen ein Reifendrucksensor-Netzwerk zu bilden.

11. Reifendrucksensor (1) nach Anspruch 10, **dadurch gekennzeichnet, dass** die BLE-Schnittstelle eingerichtet ist, von anderen BLE-Schnittstellen übermittelte Datenpakete, insbesondere Messdaten, zu empfangen und zwischenzuspeichern und die Datenpakete nach Etablieren einer Verbindung mit dem Lesegerät im Connected Mode an das Lesegerät zu übermitteln.

12. Reifendrucksensor (1) nach einem der Ansprüche 4 bis 11,
wobei die BLE-Schnittstelle (3) ein Speichermodul (8) aufweist oder mit einem Speichermodul (8) gekoppelt ist, auf welchem Identifikationsdaten von wenigsten einem vorbestimmten identifizierbaren Lesegerät (6) hinterlegt sind, und
wobei die BLE-Schnittstelle (3) eingerichtet ist, das Schalten des Mikrocontrollers (4) in seinen aktiven Betriebszustand nur unter Erfüllung der Bedingung zu veranlassen, dass die BLE-Kommunikation mit dem vorbestimmten Lesegerät (6) erfolgt.

13. Reifendrucksensor (1) nach einem der vorhergehenden Ansprüche,
wobei der Mikrocontroller (4) und die Batterie (5) mittels einer trennbaren galvanischen Kopplung (18) verbunden sind, wobei die galvanische Kopplung (18) zwischen der Batterie (5) und dem Mikrocontroller (4) im Zustand des Mikrocontrollers (4) mit reduzierter Energieaufnahme aufgehoben ist, sodass der Mikrocontroller (4) inaktiv ist, und
wobei die Funkkommunikationsschnittstelle (3), die bevorzugt als BLE-Schnittstelle (3) ausgebildet ist, eingerichtet ist, die elektrische Verbindung herzustellen zur Herbeiführung einer Spannungsversorgung des Mikrocontrollers (4), die dessen Schaltung in den aktiven Betriebszustand bewirkt.

14. Reifendrucksensor nach einem der vorhergehenden Ansprüche, **dadurch gekennzeichnet, dass** der Reifendrucksensor zusätzlich zu dem Mikrocontroller einen zweiten Mikrocontroller aufweist, wobei der Mikrocontroller zur Steuerung einer ersten Funktionalität eingerichtet ist und der zweite Mikrocontroller zur Steuerung einer zweiten Funktionalität eingerichtet ist, und wobei der Mikrocontroller und der zweite Mikrocontroller unabhängig voneinander zwischen einem Zustand mit reduzierter Energieaufnahme und einem aktiven Betriebszustand schaltbar sind, wobei der erste Mikrocontroller eingerichtet ist, den zweiten Mikrocontroller in einen aktiven Betriebszustand zu versetzen, wenn der erste Mikrocontroller einen vorgegebenen Zustand eingenommen hat, bevorzugt die BLE-Kommunikation einen vorgegebenen Status eingenommen hat.

15. Verfahren zum Auslesen von Daten eines Reifendrucksensors,
wobei der Reifendrucksensor (1) aufweist:
ein Drucksensorelement (2);
eine als BLE-Schnittstelle ausgebildete Funkkommunikationsschnittstelle (3);
einen mit dem Drucksensorelement (2) und mit der Funkkommunikationsschnittstelle (3) gekoppelten Mikrocontroller (4), der zwischen einem Zustand mit reduzierter Energieaufnahme und einem aktiven Betriebszustand schaltbar ist sowie
eine Batterie (5) oder einen Energiegenerator zur Spannungsversorgung,
wobei die Funkkommunikationsschnittstelle (3) eingerichtet ist, mit einem für Funkkommunikation eingerichteten Lesegerät (6) eine Funkkommunikation (3) aufzunehmen und in Abhängigkeit von der Aufnahme der Funkkommunikation das Schalten des Mikrocontrollers (4) von seinem Zustand mit reduzierter Energieaufnahme in
seinen aktiven Betriebszustand zu veranlassen,
oder
wobei der Reifendrucksensor (1) aufweist:
ein Drucksensorelement (2);
einen Lage- und/oder Beschleunigungssensor;
eine Funkkommunikationsschnittstelle (3), die als Bluetooth-Low-Energy-Schnittstelle (BLE-Schnittstelle) ausgebildet ist;
einen mit dem Drucksensorelement (2) und mit der Funkkommunikationsschnittstelle (3) gekoppelten Mikrocontroller (4), der zwischen einem Zustand mit reduzierter Energieaufnahme und einem aktiven Betriebszustand schaltbar ist sowie
eine Batterie (5) zur Spannungsversorgung,
wobei die Funkkommunikationsschnittstelle (3) eingerichtet ist, mit einem für Funkkommunikation eingerichteten Lesegerät (6) eine Funkkommunikation (3) aufzunehmen und in Abhängigkeit von einer Änderung der Lage und/oder Beschleunigung des Lage- und/oder Beschleunigungssensors das Schalten des Mikrocontrollers (4) von seinem Zustand mit reduzierter Energieaufnahme in seinen aktiven Betriebszustand zu veranlassen,
wobei die als BLE-Schnittstelle ausgebildete Funkkommunikationsschnittstelle (3) wiederholt Messwerte oder aus Messwerten abgeleitete Reifenparameter mit einem Advertise-Paket im Advertising State des Reifendrucksensors übermittelt, wobei ein Zeitraum zwischen einer ersten Übermittlung und einer wiederholten und aktualisierten Übermittlung in Abhängigkeit von einem Fahrzustand, insbesondere einer erfassten Mindestbeschleunigung, des Reifens gewählt wird, in dem der Reifendrucksensor angeordnet ist und wobei
die übermittelten Daten mit dem zur BLE-Kommunikation eingerichteten Lesegerät empfangen werden.

16. Verfahren nach Anspruch 15, **dadurch gekennzeichnet, dass**
- in einer ersten Phase das Übermitteln unter Verwendung jedes der drei bereitgestellten Advertising Channel erfolgt,
- in einer zweiten Phase das Lesegerät einen ersten der drei Advertising Channel, einen zweiten der drei Advertising Channel und einen dritten der drei Advertising Channel sequentiell und jeweils von einer Pause unterbrochen abfragt.

17. Verfahren nach Anspruch 16, **dadurch gekennzeichnet, dass** nach einer bestimmten Zeitdauer der zweiten Phase die zweite Phase unterbrochen wird durch eine dritte Phase, in der ein Übermitteln unter Verwendung jedes der drei bereitgestellten Advertising Channel erfolgt.

18. Verwendung eines Reifendrucksensors (1) nach einem der Ansprüche 1 bis 14 zur Übermittlung eines Reifendrucks eines unbewegten Anhängers (9b) an ein portables Lesegerät (6) oder an ein in einem Zugfahrzeug (9a) mitgeführtes Lesegerät (6).

## Claims

1. A tire pressure sensor (1), the tire pressure sensor (1) comprising:
a pressure sensing element (2);
a radio communication interface (3) configured as an NFC interface, a Bluetooth interface or a Bluetooth low energy interface (BLE interface);
a microcontroller (4) coupled to the pressure sensing element (2) and to the radio communication interface (3), the microcontroller being switchable between a reduced power consumption state and an active operating state, and
a battery (5) or an energy generator for power supply,
**characterized in that** the radio communication interface (3) is arranged to establish radio communication (3) with a reader (6) arranged for radio communication and, in dependence on the establishment of the radio communication, to cause the switching of the microcontroller (4) from its state with reduced energy consumption to its active operating state.

2. The tire pressure sensor (1) according to claim 1,
wherein the radio communication interface is a Bluetooth interface or an NFC interface.

3. A tire pressure sensor (1), the tire pressure sensor (1) comprising:
a pressure sensing element (2);
a position and/or acceleration sensor;
a radio communication interface (3) configured as an NFC interface, a Bluetooth interface or a Bluetooth low energy interface (BLE interface);
a microcontroller (4) coupled to the pressure sensing element (2) and to the radio communication interface (3), the microcontroller being switchable between a reduced power consumption state and an active operating state, and
a battery (5) for power supply,
**characterized in that** the radio communication interface (3) is set up to establish radio communication (3) with a reader (6) set up for radio communication and, as a function of a change in the position and/or acceleration of the position sensor and/or acceleration sensor, to cause the switching of the microcontroller (4) from its state with reduced energy consumption to its active operating state.

4. The tire pressure sensor (1) according to claim 1 or according to claim 3,
wherein the radio communication interface (3) is a Bluetooth low energy (BLE) interface (3),
wherein the BLE interface (3) is arranged to establish BLE communication (3) with the reader (6) arranged for BLE communication and, in dependence on the establishment of the BLE communication, to cause the switching of the microcontroller (4) from its reduced power consumption state to its active operating state.

5. The tire pressure sensor (1) according to claim 4,
wherein the BLE interface (3) is adapted to enter an advertising state to indicate its readiness to establish a connection when the microcontroller (4) is in the reduced power consumption state, and
wherein the BLE interface (3) is arranged to cause the switching of the microcontroller (4) to its active operating state at a point in time which immediately or with a predetermined time interval follows a detection of a connect request of the reader (6) by the BLE interface (3).

6. The tire pressure sensor (1) according to claim 4,
wherein the BLE interface (3) is adapted to enter an advertising state to indicate its readiness to establish a connection when the microcontroller (4) is in the reduced power consumption state, and
wherein the BLE interface (3) is arranged to cause the switching of the microcontroller (4) to its active operating state at a time immediately following or with a predetermined time interval following an establishment of a BLE connection of the BLE interface (3) to the reader (6).

7. The tire pressure sensor (1) according to any one of claims 4 to 6,
wherein the BLE interface (3) is arranged to form a network or part of a network with the reader (6) in BLE communication, in which the BLE interface (3) is in peripheral status and the reader (6) is in central status.

8. The tire pressure sensor (1) according to any one of claims 4 to 6,
wherein the BLE interface (3) is arranged to form a network or part of a network with the reader (6) in BLE communication, in which the BLE interface (3) is in central status and the reader (6) is in peripheral status.

9. The tire pressure sensor (1) according to claim 8,
wherein the BLE interface (3) is arranged such that after establishing a connection with the reader in the connected mode, the transmitting and receiving power and/or the transmission times can be adjusted, preferably through control by means of the reader.

10. The tire pressure sensor (1) according to any one of claims 7 to 9,
wherein the BLE interface (3) is arranged, in particular in the central state, to enter a scanning state in order to detect further BLE interfaces in order to form a tire pressure sensor network with these.

11. The tire pressure sensor (1) according to claim 10, **characterized in that** the BLE interface is arranged to receive and temporarily store data packets transmitted from other BLE interfaces, in particular measurement data, and to transmit the data packets to the reader in connected mode after establishing a connection with the reader.

12. The tire pressure sensor (1) according to any one of claims 4 to 11,
wherein the BLE interface (3) comprises or is coupled to a memory module (8) on which identification data of at least one predetermined identifiable reader (6) is stored, and
wherein the BLE interface (3) is arranged to cause the switching of the microcontroller (4) to its active operating state only upon satisfaction of the condition that a BLE communication with the predetermined reader (6) takes place.

13. The tire pressure sensor (1) according to any one of the preceding claims,
wherein the microcontroller (4) and the battery (5) are connected by means of a separable galvanic coupling (18), wherein the galvanic coupling (18) between the battery (5) and the microcontroller (4) is removed in the state of the microcontroller (4) with reduced energy consumption, so that the microcontroller (4) is inactive, and
wherein the radio communication interface (3), which is preferably embodied as a BLE interface (3), is arranged to establish the electrical connection for providing a voltage supply of the microcontroller (4), which results in its switching into the active operating state.

14. The tire pressure sensor according to any one of the preceding claims, **characterized in that** the tire pressure sensor comprises a second microcontroller in addition to the microcontroller, wherein the microcontroller is arranged to control a first functionality and the second microcontroller is arranged to control a second functionality, and wherein the microcontroller and the second microcontroller are independently switchable between a reduced power consumption state and an active operating state, wherein the first microcontroller is arranged to set the second microcontroller to an active operating state when the first microcontroller has assumed a predetermined state, preferably the BLE communication has assumed a predetermined state.

15. Method of reading data from a tire pressure sensor, said tire pressure sensor (1) comprising:
a pressure sensing element (2);
a radio communication interface (3) configured as a BLE interface;
a microcontroller (4) coupled to the pressure sensing element (2) and to the radio communication interface (3), the microcontroller being switchable between a reduced power consumption state and an active operating state, and
a battery (5) or an energy generator for power supply,
wherein the radio communication interface (3) is arranged to establish radio communication (3) with a reader (6) arranged for radio communication and to cause the microcontroller (4) to be switched from its reduced power consumption state to its active operating state in dependence on the establishment of the radio communication,
or
said tire pressure sensor (1) comprising:
a pressure sensing element (2);
a position and/or acceleration sensor;
a radio communication interface (3) configured as a Bluetooth low energy interface (BLE interface);
a microcontroller (4) coupled to the pressure sensing element (2) and to the radio communication interface (3), the microcontroller being switchable between a reduced power consumption state and an active operating state, and
a battery (5) for power supply,
wherein the radio communication interface (3) is set up to establish radio communication (3) with a reader (6) set up for radio communication and to cause the switching of the microcontroller (4) from its state with reduced energy consumption to its active operating state as a function of a change in the position and/or acceleration of the position sensor and/or acceleration sensor,
wherein the radio communication interface (3), which is embodied as a BLE interface, repeatedly transmits measured values or tire parameters derived from measured values with an advertise packet in the advertising state of the tire pressure sensor, wherein a period of time between a first transmission and a repeated and updated transmission is selected as a function of a driving state, in particular a detected minimum acceleration, of the tire in which the tire pressure sensor is arranged,
and wherein
the transmitted data is received with the reader set up for BLE communication.

16. The method according to claim 15, **characterized in that**
- in a first phase, the transmission is carried out using each of the three advertising channels provided,
- in a second phase, the reader interrogates a first one of the three advertising channels, a second one of the three advertising channels and a third one of the three advertising channels sequentially, each interrupted by a pause.

17. The method according to claim 16, **characterized in that** after a certain period of time of the second phase, the second phase is interrupted by a third phase in which a transmission takes place using each of the three provided advertising channels.

18. Use of a tire pressure sensor (1) according to any one of claims 1 to 14 for transmitting a tire pressure of an unmoved trailer (9b) to a portable reader (6) or to a reader (6) carried in a towing vehicle (9a).

## Revendications

1. Capteur de pression de pneu (1), le capteur de pression de pneu (1) comprenant :
un élément capteur de pression (2) ;
une interface de communication radio (3) qui est conçue comme une interface NFC, une interface Bluetooth ou une interface Bluetooth low energy (interface BLE) ;
un microcontrôleur (4) couplé à l'élément de détection de pression (2) et à l'interface de communication radio (3), le microcontrôleur étant commutable entre un état de consommation d'énergie réduite et un état de fonctionnement actif, et
une batterie (5) ou un générateur d'énergie pour l'alimentation électrique,
**caractérisé en ce que** l'interface de communication radio (3) est configurée pour établir une communication radio (3) avec un lecteur (6) configuré pour une communication radio et pour faire en sorte que le microcontrôleur (4) soit commuté de son état de consommation d'énergie réduite à son état de fonctionnement actif en fonction de l'établissement de la communication radio.

2. Capteur de pression de pneu (1) selon la revendication 1, dans lequel l'interface de communication radio est une interface Bluetooth ou une interface NFC.

3. Capteur de pression de pneu (1), le capteur de pression de pneu (1) comprenant :
un élément capteur de pression (2) ;
un capteur de position et/ou d'accélération ;
une interface de communication radio (3) qui est conçue comme une interface NFC, une interface Bluetooth ou une interface Bluetooth low energy (interface BLE) ;
un microcontrôleur (4) couplé à l'élément de détection de pression (2) et à l'interface de communication radio (3), le microcontrôleur étant commutable entre un état de consommation d'énergie réduite et un état de fonctionnement actif, et
une batterie (5) pour l'alimentation électrique,
**caractérisé en ce que** l'interface de communication radio (3) est configurée pour établir une communication radio (3) avec un lecteur (6) configuré pour la communication radio et, en fonction d'une modification de la position et/ou de l'accélération du capteur de position et/ou d'accélération, pour faire passer le microcontrôleur (4) de son état à consommation d'énergie réduite à son état de fonctionnement actif.

4. Capteur de pression de pneu (1) selon la revendication 1 ou selon la revendication 3,
dans lequel l'interface de communication radio (3) est une interface (3) Bluetooth Low Energy (BLE),
dans lequel l'interface BLE (3) est agencée pour établir une communication BLE (3) avec le lecteur (6) agencé pour une communication BLE et pour provoquer la commutation du microcontrôleur (4) de son état de consommation d'énergie réduite à son état de fonctionnement actif en fonction de l'établissement de la communication BLE.

5. Capteur de pression de pneu (1) selon la revendication 4,
dans lequel l'interface BLE (3) est adaptée pour être mis dans un état de publicité pour indiquer qu'elle est prête à établir une connexion lorsque le microcontrôleur (4) est dans l'état de consommation d'énergie réduite, et
dans lequel l'interface BLE (3) est agencée pour provoquer la commutation du microcontrôleur (4) dans son état de fonctionnement actif à un moment qui suit immédiatement ou avec un intervalle de temps prédéterminé une détection d'une demande de connexion du lecteur (6) par l'interface BLE (3).

6. Capteur de pression de pneu (1) selon la revendication 4,
dans lequel l'interface BLE (3) est adaptée pour être mis dans un état de publicité pour indiquer qu'elle est prête à établir une connexion lorsque le microcontrôleur (4) est dans l'état de consommation d'énergie réduite, et
dans lequel l'interface BLE (3) est agencée pour provoquer la commutation du microcontrôleur (4) vers son état de fonctionnement actif à un moment suivant immédiatement ou avec un intervalle de temps prédéterminé suivant un établissement d'une connexion BLE de l'interface BLE (3) au lecteur (6).

7. Capteur de pression de pneu (1) selon l'une quelconque des revendications 4 à 6,
dans lequel l'interface BLE (3) est agencée pour former un réseau ou une partie d'un réseau avec le lecteur (6) dans le contexte de la communication BLE, dans lequel l'interface BLE (3) assume un statut périphérique et le lecteur (6) assume un statut central.

8. Capteur de pression de pneu (1) selon l'une quelconque des revendications 4 à 6,
dans lequel l'interface BLE (3) est agencée pour former un réseau ou une partie d'un réseau avec le lecteur (6) dans le cadre de la communication BLE, dans lequel l'interface BLE (3) assume un statut central et le lecteur (6) assume un statut périphérique.

9. Capteur de pression de pneu (1) selon la revendication 8, dans lequel l'interface BLE (3) est configurée de manière à ce que, après avoir établi une connexion avec le lecteur en mode connecté, la puissance d'émission et de réception et/ou les temps de transmission puissent être ajustés, de préférence par commande au moyen du lecteur.

10. Capteur de pression de pneu (1) selon l'une quelconque des revendications 7 à 9,
dans lequel l'interface BLE (3) est configurée, en particulier dans l'état central, pour prendre un état de balayage afin de détecter d'autres interfaces BLE afin de former un réseau de capteurs de pression de pneu avec celles-ci .

11. Capteur de pression de pneu (1) selon la revendication 10, **caractérisé en ce que** l'interface BLE est configurée pour recevoir et stocker temporairement des paquets de données transmis par d'autres interfaces BLE, notamment des données de mesure, et pour transmettre les paquets de données au lecteur en mode connecté après avoir établi une connexion avec le lecteur.

12. Capteur de pression de pneu (1) selon l'une quelconque des revendications 4 à 11,
dans lequel l'interface BLE (3) comprend ou est couplée à un module de mémoire (8) sur lequel sont stockées les données d'identification d'au moins un lecteur identifiable prédéterminé (6), et
dans lequel l'interface BLE (3) est agencée pour provoquer la commutation du microcontrôleur (4) vers son état de fonctionnement actif uniquement lorsque la condition de communication BLE avec le lecteur prédéterminé (6) est remplie.

13. Capteur de pression de pneu (1) selon l'une quelconque des revendications précédentes,
dans lequel le microcontrôleur (4) et la batterie (5) sont reliés au moyen d'un couplage galvanique séparable (18), dans lequel le couplage galvanique (18) entre la batterie (5) et le microcontrôleur (4) est supprimé dans l'état du microcontrôleur (4) à consommation d'énergie réduite, de sorte que le microcontrôleur (4) est inactif, et
dans lequel l'interface de communication radio (3), qui est de préférence conçue comme une interface BLE (3), est configurée pour établir la connexion électrique pour provoquer une alimentation en tension du microcontrôleur (4), ce qui provoque sa commutation dans l'état de fonctionnement actif.

14. Capteur de pression de pneu selon l'une quelconque des revendications précédentes, **caractérisé en ce que** le capteur de pression de pneu comprend un second microcontrôleur en plus du microcontrôleur, dans lequel le microcontrôleur est agencé pour commander une première fonctionnalité et le second microcontrôleur est agencé pour commander une seconde fonctionnalité, et dans lequel le microcontrôleur et le second microcontrôleur sont indépendamment commutables entre un état de consommation d'énergie réduite et un état de fonctionnement actif, dans lequel le premier microcontrôleur est agencé pour mettre le second microcontrôleur dans un état de fonctionnement actif lorsque le premier microcontrôleur a pris un état prédéterminé, de préférence la communication BLE a pris un état prédéterminé.

15. Procédé de lecture de données à partir d'un capteur de pression de pneu,
dans lequel le capteur de pression de pneu (1) comprend :
un élément capteur de pression (2) ;
une interface de communication radio (3) conçue comme une interface BLE ;
un microcontrôleur (4) couplé à l'élément de détection de pression (2) et à l'interface de communication radio (3), le microcontrôleur étant commutable entre un état de consommation d'énergie réduite et un état de fonctionnement actif, et
une batterie (5) ou un générateur d'énergie pour l'alimentation électrique,
dans lequel l'interface de communication radio (3) est agencée pour établir une communication radio (3) avec un lecteur (6) agencé pour une communication radio et pour faire en sorte que le microcontrôleur (4) soit commuté de son état de consommation d'énergie réduite à son état de fonctionnement actif en fonction de l'établissement de la communication radio,
ou
dans lequel le capteur de pression de pneu (1) comprend :
un élément capteur de pression (2) ;
un capteur de position et/ou d'accélération ;
une interface de communication radio (3), qui est conçue comme une interface Bluetooth low energy (interface BLE) ;
un microcontrôleur (4) couplé à l'élément de détection de pression (2) et à l'interface de communication radio (3), le microcontrôleur étant commutable entre un état de consommation d'énergie réduite et un état de fonctionnement actif, et
une batterie (5) pour l'alimentation électrique,
dans lequel l'interface de communication radio (3) est configurée pour établir une communication radio (3) avec un lecteur (6) configuré pour la communication radio et, en fonction d'une modification de la position et/ou de l'accélération du capteur de position et/ou d'accélération, pour provoquer la commutation du microcontrôleur (4) de son état à consommation d'énergie réduite à son état de fonctionnement actif,
dans lequel l'interface de communication radio (3) sous la forme d'une interface BLE transmet de manière répétée des valeurs mesurées ou des paramètres de pneu dérivés de valeurs mesurées avec un paquet d'annonce dans l'état d'annonce du capteur de pression de pneu, dans lequel une période de temps entre une première transmission et une transmission répétée et actualisée est sélectionnée en fonction d'un état de conduite, en particulier une accélération minimale détectée, du pneu dans lequel le capteur de pression de pneu est disposé et dans lequel
les données transmises sont reçues avec le lecteur configuré pour la communication BLE.

16. Procédé selon la revendication 15, **caractérisé en ce que**
- dans une première phase, la transmission se fait en utilisant chacun des trois canaux publicitaires prévus,
- dans une deuxième phase, le lecteur interroge un premier des trois canaux publicitaires, un deuxième des trois canaux publicitaires et un troisième des trois canaux publicitaires de manière séquentielle, chacun étant interrompu par une pause.

17. Procédé selon la revendication 16, **caractérisé en ce qu'**après une certaine période de temps de la deuxième phase, la deuxième phase est interrompue par une troisième phase dans laquelle une transmission est effectuée en utilisant chacun des trois canaux publicitaires fournis.

18. Utilisation d'un capteur de pression des pneumatiques (1) selon l'une quelconque des revendications 1 à 14 pour transmettre une pression des pneumatiques d'une remorque non déplacée (9b) à un lecteur portable (6) ou à un lecteur (6) embarqué dans un véhicule tracteur (9a).
